# NEUE EUROPÄISCHE PATENTSCHRIFT

(11) **EP 1 527 869 B2**
(45) Veröffentlichungstag und Bekanntmachung des Hinweises auf die Entscheidung über den Einspruch: **11.10.2017**
(45) Hinweis auf die Patenterteilung: 08.03.2006
(21) Anmeldenummer: 04024950.0
(22) Anmeldetag: 20.10.2004
(51) Int. Cl.: B29C 59/02, C23C 4/02

(54) **Verfahren zur Behandlung von Kunststoffoberflächen, insbesondere zur Vorbehandlung vor einer metallischen Beschichtung**
Process for treating of plastic surfaces, in particular for the pretreatment before metal-coating
Procédé pour le traitement de surfaces en matière plastique, notamment pour le prétraitement avant revêtement métallique

(30) Priorität: 31.10.2003 DE 10350864
(43) Veröffentlichungstag der Anmeldung: 04.05.2005
(73) Patentinhaber: STB-GH-TEC UG (haftungsbeschränkt), 31600 Uchte (DE)
(72) Erfinder: Otte, Karl Heinz, 32369 Espelkamp (DE)

(56) Entgegenhaltungen:
- EP-A- 0 332 886
- CH-A- 454 678
- DE-A- 4 124 423
- DE-C- 3 825 200
- DE-C- 19 810 382
- GB-A- 848 762
- US-A- 4 333 743
- US-A- 4 877 638
- US-A- 5 575 825

## Beschreibung

### GEBIET DER ERFINDUNG

Die Erfindung betrifft die Vorbehandlung von Kunststoffoberflächen vor einer Beschichtung mit metallischen Werkstoffen, insbesondere zum Schaffen von Kunststoff gehäusen, die zuverlässige Abschirmungseigenschaften aufweisen und für den Einsatz in der Elektronik geeignet sind, um elektronische Geräte gegen elektromagnetische Störungen abzuschirmen.

### STAND DER TECHNIK

Es ist bekannt, Kunststoffoberflächen vor dem Aufbringen von metallischen Werkstoffen, insbesondere Zink, mit Quarzsand, Korund oder Primer aufzurauen. Der Werkstoff, z.B. Zink, wird z.B. im Zink-Lichtbogen-Spritzverfahren auf die aufgeraute Oberfläche aufgebracht. Der Einsatz eines Primers bei der Vorbehandlung führt dazu, dass aufgrund der chemischen Aktivität des Primers die Kunststoffoberfläche angelöst wird und der Primer an sich als Aufnahme für die Zinkschicht dient. Damit geht eine gewisse Beschädigung der Kunststoffoberfläche einher. Außerdem ist der Einsatz von Primem aus umwelttechnischen Gesichtspunkten oftmals unerwünscht.

Wird Quarzsand oder Korund verwendet, d.h. die Kunststoffoberfläche mit Quarzsand oder Korund gestrahlt, führt dies dazu, dass die Oberfläche des Kunststoffs ungleichmäßig wird. Im Falle von Quarzsand wird sie mikroskopisch glatt und wellenförmig, d.h. mit einem Wellenprofil im Querschnitt ohne wesentliche scharfe Kanten und verdichtet, während sie im Fall von Korund im mikroskopischen Querschnitt spitz-gezackt ist, ,Korund trägt außerdem dazu bei, den Kunststoff, insbesondere Kanten und Ecken, zu zerstören. Die verdichtete Oberfläche sowie der Angriff auf die Kanten und Ränder des Kunststoffs führt dazu, dass eine Beschichtung mit einem metallischen Werkstoff anschließend schwierig wird, da die verdichtete Oberfläche verhältnismäßig schlechte Hafteigenschaften aufweist. Außerdem ist die Kunststoffoberfläche möglicherweise lokal beschädigt.

Aus der DE 197 29 891 A1 ist ein Verfahren zum gezielten Aufrauhen von Kunststoffoberflächen als Grundlage für eine verbesserte Haftung von Schichten und Schichtsystemen auf dem aufgerauhten Substrat bekannt. Dazu wird die Kunststoffoberfläche mit einem Siliziumkarbid mit konstanter Strömungsgeschwindigkeit bestrahlt.

Aus der DE 88 03 364 U1 ist es bekannt, ein Strahlmittel auf der Basis thermoplastischer Kunststoffe zum Entgraten, Reinigen oder Mattieren von Artikeln zu verwenden.

Aus der US 4,877,638 ist ein Verfahren zum Erfassen von Rissen auf der Oberfläche eines Artikels nach dem Entfernen einer Beschichtung bekannt. Dazu wird die Oberfläche mit einem durch UV-Licht detektierbaren Material strahlbehandelt, wobei das durch UV-Licht detektierbare Material in einem wärmeaushärtenden thermoplastischen Strahlmedium enthalten ist.

Aus der DE 41 24 423 A1 geht ein thermisches Spritzschichtverfahren und eine Anlage zu dessen Durchführung hervor. Dabei wird eine Materialschicht auf eine ebene oder gekrümmte Fläche eines Werkstücks aufgebracht, wobei entweder das Werkstück an einer Spritzdüse vorbei bewegt wird, oder die Spritzdüse über die zu beschichtende Fläche des Werkstücks bewegt wird.

Aus der DE 198 10 382 C1 geht ein Flammspritzverfahren zur Vorbehandlung und Beschichtung von Oberflächen hervor. Dazu wird die Oberfläche mit einem Strahlprozess zur Aktivierung des zu behandelnden Bauteils mittels eines Strahlguts beschichtet. Ein Spritzprozess zur Beschichtung des Bauteils wird unter Verwendung einer Spritzanlage durchgeführt, wobei der Strahlprozess und der Spritzprozess von der selben Anlage, jedoch getrennt voneinander, durchgeführt werden.

Aus der GB 848762 A wird zum Aufrauen einer Oberfläche einer Pressplatte und zum Vorsehen eines regulären Musters dafür gesorgt, dass die aufgeraute Platte unregelmäßig gestaltete Hohlräume oder Vertiefungen und hervorstehende Spitzen aufweist, damit eine unregelmäßige Verzahnung vorgesehen wird. Dies beinhaltet das Strahlbehandeln der Platte mit Partikeln mit scharfen Kanten.

### DARSTELLUNG DER ERFINDUNG

Davon ausgehend ist es eine Aufgabe der Erfindung, ein Verfahren zur Behandlung von Kunststoffoberflächen zu schaffen, das eine aufgeraute Oberfläche für das anschließende Aufbringen einer metallischen Beschichtung schafft, wobei gleichzeitig die Hafteigenschaften der Kunststoffoberfläche zufriedenstellend sind. Diese Aufgabe wird mit einem Verfahren mit den Merkmalen des Anspruchs 1 gelöst.

Ferner ist es eine Aufgabe der Erfindung, eine metallisch beschichtete Kunststoffoberfläche mit guten Hafteigenschaften zwischen Kunststoff und Metall bereitzustellen. Diese Aufgabe wird mit den Merkmalen des Anspruchs 9 gelöst.

Bevorzugte Ausführungsformen sind durch die abhängigen Ansprüche angegeben.

Ein wesentlicher Aspekt der Erfindung liegt darin, eine Strahlbehandlung als Vorbereitung zur Beschichtung an einer Oberfläche eines Kunststofibauteils auszuführen, wobei für die Strahlbehandlung Kunststoffgranulat als Strahlmittel eingesetzt wird. Durch die Verwendung eines Kunststoffgranulatstrahlmittels ist es möglich, die Kunststoffoberfläche zerstörungsfrei aufzurauen. Gleichzeitig ist das Kunststoffstrahlmittel jedoch so aggressiv, dass durch die faserige Aufrauung der Kunststoffoberfläche eine optimale Haftungsschicht für das aufzubringende metallische Beschichtungsmittel geschaffen wird. Insbesondere wird die Oberfläche des bestrahlten Kunststoffs faserig und leicht erwärmt. D.h. sie wird weder wie bei der Verwendung von Quarzsand glatt und wellenförmig, noch wird sie zerhackt mit spitzen Kanten, wie bei der Verwendung von Korund. Gleichzeitig wird vermieden, dass sich die Oberfläche des Kunststoffs stark verdichtet und dadurch die Haftungseigenschaften des Kunststoffs beeinträchtigt werden.

Durch die Bestrahlung mit einem körnerförmigen, verhältnismäßig weichen Strahlmittel wird erreicht, dass während der Bestrahlung die Oberfläche des anschließend zu beschichtenden Kunststoffteils sich lokal erwärmt und ausdehnt. Gleichzeitig kommt es zu einer Spannungsfreisetzung und die Oberfläche zieht sich beim Abkühlen rasch zusammen. Dadurch werden faserige Hinterschnitte gebildet, in die sich der metallische Beschichtungswerkstoff, beispielsweise Zink, festsetzen kann, und somit gut haften kann. Wenn anschließend, d.h. beim Aufbringen der metallischen Beschichtung, weiter gesteuert abgekühlt wird, kann eine Verteilung der einzelnen Partikelchen des metallischen Werkstoffes erreicht werden, die auch in die Hinterschnitte eingreifen, wodurch zu einer entscheidenden Haftungsverbesserung zwischen metallischem Werkstoff und Kunststoffwerkstoff beigetragen wird.

Insbesondere wird dabei ausgenutzt, dass der Kunststoff gesteuert abgekühlt werden kann und damit ein gesteuertes Schrumpfungsverhalten der lokal erwärmten Oberflächenschicht zu Tage tritt. Durch die Strahlbehandlung mit Kunststoffgranulat wird somit vordergründig die lokale Erwärmung des zu behandelnden Kunststoffs in Oberflächennähe ausgenutzt und weniger eine durch den Aufprall der Kunststoffpartikel bewirkte lokale, mikroskopische Zerstörung der Oberfläche.

Durch die verbesserte Haftung zwischen metallischer Schicht und Kunststoffschicht, die auf die Eigenschaften der Oberfläche nach der Strahlbehandlung zurückzuführen sind, kann eine gute Abschirmung bezüglich elektro-magnetischer Strahlung beibehalten werden, auch wenn das Bauteil einer Klimabeanspruchung ausgesetzt ist. Beispielsweise kann durch das erfindungsgemäße Verfahren beim Aufbringen einer Zinkschicht durch ein Spritzverfahren mit einer Schichtdicke von 118,5 µm auf die vorher behandelte Oberfläche des Kunststoffbauteils eine Schirmdämpfung bei 30 MHz von 95 dB und eine Schirmdämpfung von 105 dB bei 2,5 GHz erreicht werden. Auch nach einem standardisierten Klimatest liegt bei 30 MHz die Schirmdämpfung noch bei 94 dB, während sie bei 2,5 GHz bei 58 dB liegt.

### KURZE BESCHREIBUNG DER ZEICHNUNGEN

Anhand der beigefügten Figuren wird nachfolgend die Erfindung beispielhaft beschrieben, wobei
- Fig. 1: schematisch eine Beschichtungsanlage zum Beschichten von Kunststoffbauteilen mit Zink aus Abschirmungsgründen zeigt;
- Fig. 2: eine schematische Querschnittsansicht einer beschichteten Kunststoffoberfläche ist; und
- Fig. 3A und 3B: Querschnitte durch einen mit Zink beschichteten Kunststoff sind.

### WEGE ZUR AUSFÜHRUNG DER ERFINDUNG

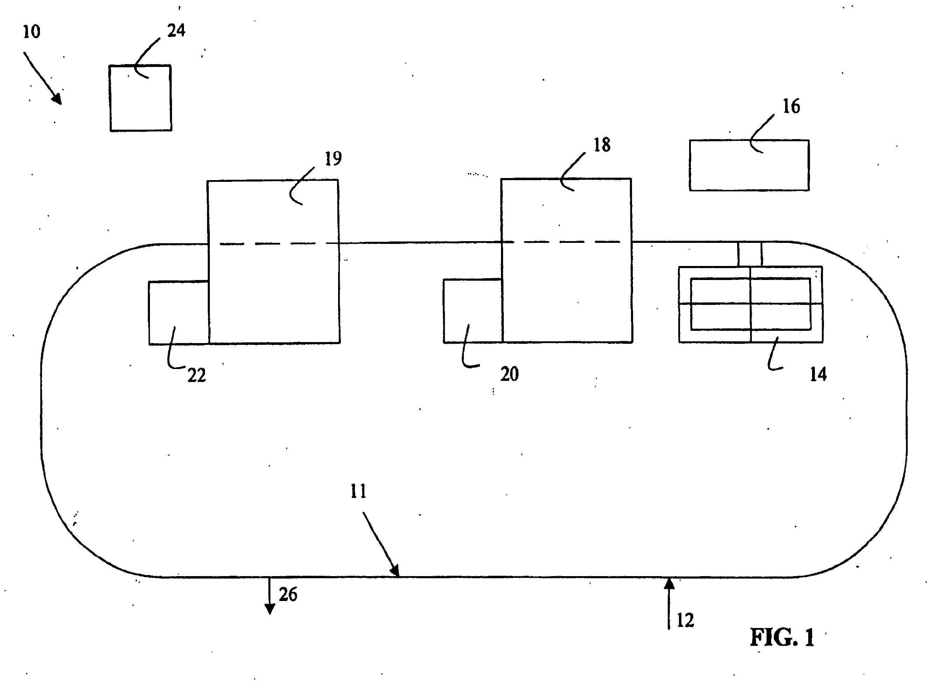

Fig. 1 zeigt in schematischer Ansicht eine Beschichtungsanlage zum Beschichten von Kunststoffbauteilen mit Zink. Derartige beschichtete Kunststoffbauteile dienen insbesondere als Gehäuse im elektronischen Bereich, die eine hohe Abschirmung gegen elektromagnetische Störungen erfordern.

Die in Fig. 1 dargestellte Beschichtungsanlage 10 enthält eine Transporteinrichtung, mit der die zu beschichtenden Kunststoffbauteile an die einzelnen Stationen der Anlage gebracht werden können. In der in der Fig. dargestellten Ausführungsform wird die Transporteinrichtung durch eine Power & Free Anlage 11 gebildet, in der mehrere Transportrahmen 14 mit jeweils einer oder mehreren Aufnahmen für die Werkstücke angebracht sind und durch sie transportiert werden. Beispielsweise können an der durchgehend laufenden und an der Decke befestigten Anlage acht Rahmen fest installiert sein, wobei jeder Transportrahmen 14 z.B. vier verschiedene Abdeck- und Aufnahmewerkzeuge (Teileaufnahmen) aufweist, so dass mit einem Umlauf der Power & Free Anlage 11 bereits 32 verschiedene Aufträge bearbeitet werden können. Die Anzahl der Transportrahmen 14 ebenso wie der darin enthaltenen Aufnahmen für die Bauteile kann nach Bedarf ebenso wie die Art der Förderanlage für den Transport der Bauteile an sich angepasst werden. In der Fig. ist nur einer der Transportrahmen 14 dargestellt.

An der Teileaufnahme, d.h. bei der gezeigten Ausführungsform am Transportrahmen 14, ist vorzugsweise ein Kennzeichnungsmittel, z.B. ein Chip, angebracht, mittels dessen eine Lesestation 16 den Inhalt des Transportrahmens erkennt und die individuell für den jeweiligen Inhalt, d.h. die entsprechenden Bauteile, auszuführende Strahl- und Spritzbehandlung in Form einer Arbeitsanweisung für die Strahlstationen erkennt. Unter anderem kann die Arbeitsanweisungsinformation die Geometrie der Werkstücke, die Dauer der jeweiligen Strahl- bzw. Spritzbehandlungen und deren zeitlichen Ablauf umfassen. Dies trägt zu einer Flexibilisierung der Bearbeitung bei.

Die Anlage 10 enthält neben der Lesestation 16 ferner 2 Strahlkabinen 18, 19, die von den Transportrahmen 14, von denen in der Fig. lediglich einer dargestellt ist, nacheinanderfolgend passiert werden und deren Türen sich durch die (nicht dargestellte) Steuereinheit der Anlage gesteuert automatisch öffnen bzw. schließen. In jeder der Strahlkabinen ist ein Strahlraum vorgesehen, in dem Fixiereinrichtungen für den Rahmen angebracht sind, und ein Roboter, der die gewünschte Bearbeitung ausführt. Die Bearbeitung wird dabei vorzugsweise von einer Steuereinrichtung zentral gesteuert und führt die an der Lesestation 16 von dem am Transportrahmen 14 angebrachten Chip bzw. anderweitigen Kennzeichnungsmittel gelesene, geforderte Bearbeitung durch. In der ersten Strahlkabine 18 ist ferner ein Roboter vorgesehen, der die Strahlbehandlung, d.h. das Aufbringen des Kunststoffgranulats, steuert und ausführt. Außerdem ist eine Filtereinrichtung 20 beispielhaft für verschiedene Absaug- und Filteranlagen für das Strahlmittel gezeigt, die an der ersten Strahlkabine 18 vorgesehen ist. Die Strahldüse, aus der das Kunststoffgranulat ausgespritzt wird, ist bevorzugter Weise an einem Roboterarm frei beweglich befestigt, so dass unterschiedlichste Orte erreicht werden können und die Strahlbehandlung individuell in Abhängigkeit von der Gestalt des zu strahlenden Bauteils in dem Transportrahmen 14, der während der Strahlbehandlung in einer entsprechenden Fixiereinrichtung im Strahlraum befestigt ist, durchgeführt werden kann. Die Aufbringung des Zinks als Beispiel für den metallischen Werkstoff kann dabei z.B. im Zink-Lichtbogen-Spritzverfahren erfolgen.

In der zweiten Strahlkabine 19 ist neben dem Strahlraum und der Fixiereinrichtung für den Rahmen ein Roboter vorgesehen, der eine integrierte Metallspritzanlage 22 aufweist. Die Metallspritzanlage umfasst eine Metallspritzpistole, die wiederum vorzugsweise an einem Roboterarm frei beweglich befestigt ist, so dass der metallische Werkstoff, beispielsweise Zink, angepasst an die Gestaltung des Bauteils auf dieses aufgebracht werden kann. An diese Kabine angeschlossen ist eine CO₂-Löschanlage 24 zur Spülung des Strahlraums mit CO₂.

Die Anlage enthält ferner eine Beladestation 12 sowie eine Entladestation 26, an denen die zu beschichtenden Bauteile in die Transportrahmen 14 von Hand oder mittels eines Roboters o. ä. eingesetzt und aus diesen entnommen werden.

Neben dem Betrieb der Anlage 10 zu einer Beschichtung von Kunststoffbauteilen kann die dargestellte Anlage 10 auch alternativ in einem Betrieb betrieben werden, in dem die Entsorgung beschichteter Teile erfolgt, wobei eine Trennung von Metall und Kunststoff vorgenommen wird.

Im Beschichtungsbetrieb werden die zu beschichtenden Bauteile an der Beladestation 12 in den Transportrahmen 14 eingesetzt und der Transportrahmen 14 wird mit einem entsprechenden Kennzeichen, beispielsweise einem Chip, mit darauf gespeicherter Information bezüglich der Bauteile bestückt. Anschließend werden die Bauteile durch die Power & Free Anlage durch eine (nicht dargestellte) Steuereinrichtung automatisch gesteuert an der Lesestation 16 vorbei zur ersten und anschließend zur zweiten Strahlkabine transportiert.

In der ersten Strahlkabine 18 wird im Beschichtungsbetrieb mittels des Roboters das Kunststoffgranulat als Strahlmittel an die zu strahlende Oberfläche zugeführt, so dass die Oberfläche aufgeraut wird.

Das bevorzugte Strahlmittel ist ein Duroplast mit der Bezeichnung DS II mit einer Körnergröße im Bereich von 12/16, d.h. mit Körnem mit einem mittleren Durchmesser von 12 bis 16 µ (0,12 - 0,16 mm). DS II bezeichnet ein Duroplast Strahlmittel der Gruppe II (12/16). Der Strahldruck während des Strahlens beträgt nach einer bevorzugten Ausführungsform etwa 4 bar. Mit diesen Parametern während des Strahlens kann erreicht werden, dass die Oberfläche des Kunststoffs an sich nicht zerstört, sondern lediglich faserig gemacht wird, da sich durch das Strahlen der Oberfläche diese lokal erwärmt und ausdehnt und es dadurch zu Spannungsentladungen kommt, die zur mikroskopisch faserigen Oberfläche führen.

In der zweiten Strahlkabine 19 wird die vorbehandelte Oberfläche der Bauteile im Beschichtungsbetrieb metallisch beschichtet.

Bei einem Betrieb zur Entsorgung von beschichteten Teilen wird in der Anlage 10 die zweite Strahlkabine 19 nicht betrieben, d.h. sie wird aus dem Ablauf abgeschaltet. Zu entsorgende, beschichtete Teile werden in die Transportrahmen 14 gelegt. In der ersten Strahlkabine 18 wird ein Strahlvorgang an den beschichteten Teile durchgeführt, wobei ein zum Lösen des metallischen Werkstoffs geeignetes Strahlmittel verwendet wird. Durch ein anschließendes Trennungsverfahren zwischen dem abgelösten metallischen Werkstoff und dem Strahlmittel kann das über die Filter- und Absorganlagen abgesaugte, mit dem metallischen Werkstoff vermischte Strahlmittel recycliert werden, ebenso wie der metallische Werkstoff. Das Bauteil an sich liegt nach der Strahlbehandlung als reines Kunststoffbauteil vor, so dass eine werkstoffspezifische Entsorgung vorgenommen werden kann.

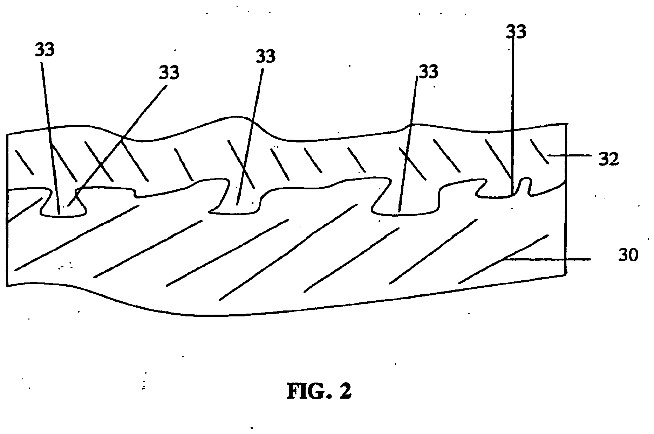

Fig. 2 zeigt eine schematische Querschnittsansicht durch eine beschichtete Kunststoff oberfläche 30. Die Beschichtungsschicht ist mit Referenzziffer 32 angegeben, und wird beispielsweise durch eine Zinkschicht gebildet. Wie aus Fig. 2 zu erkennen ist, haben sich durch den Strahlvorgang mit Kunststoffgranulat auf der Kunststoffoberfläche 30 Hinterschneidungen 33 gebildet, in die das Beschichtungsmaterial der Beschichtungsschicht 32 beim Beschichten gelangt. Dadurch wird die gute Haftung zwischen der Kunststoffoberfläche 30 und der Beschichtungsschicht 32 erreicht.

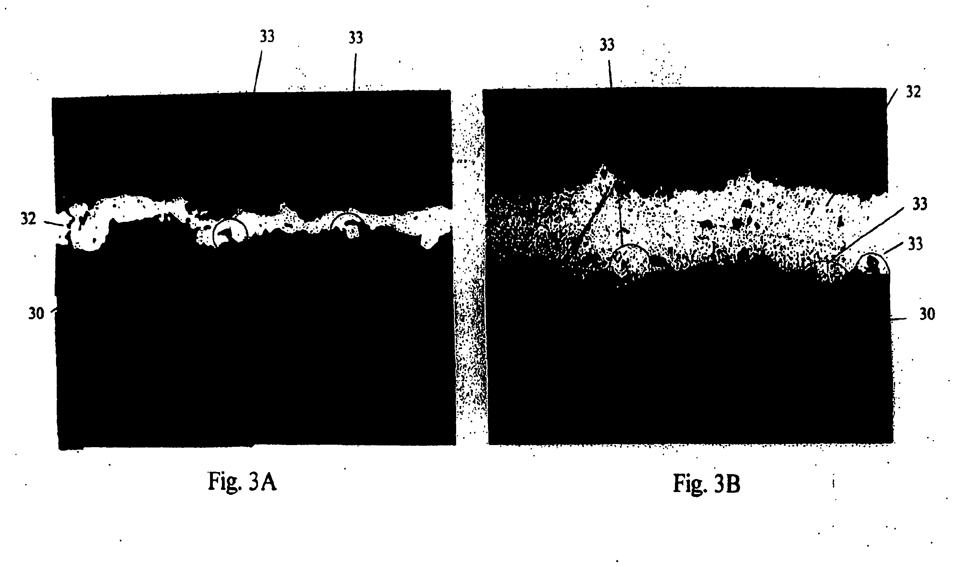

Fig. 3A und 3B zeigen jeweils mikroskopische Ansichten eines Querschliffs einer PS-Oberfläche, die mit Zink beschichtet ist. In Fig. 3A ist die Dicke der Beschichtung ca. 50 µm, in Fig. 3B etwa 200 µm. An den mit 33 gekennzeichneten Stellen sind jeweils wiederum Hinterschneidungen zu erkennen, die durch die Strahlbehandlung entstanden sind und in die sich das Beschichtungsmaterial setzt. Ferner ist insbesondere in Fig. 3A zu erkennen, dass sich diese Hinterschneidungen, die als Fasern von der Oberfläche abstehen, zumindest teilweise bei einer verhältnismäßig dünnen Zinkbeschichtung als Abdruck des Untergrunds auf der Metalloberfläche erkennen lassen.

Der wesentliche Aspekt der Erfindung liegt somit darin, vor einer Beschichtung mit einem metallischen Werkstoff die Oberflächen von Kunststoffbauteilen derart vorzubehandeln, dass sie zwar aufgeraut werden und somit der metallische Werkstoff besser an der Kunststoffoberfläche haftet, sie jedoch andererseits weder zerstört noch derart verfestigt werden, dass die Haftung zwischen Kunststoff und metallischem Werkstoff beeinträchtigt ist. Dazu wird Kunststoffgranulat als Strahlmittel eingesetzt.

## Patentansprüche

1. Verfahren zur Beschichtung von Kunststoffoberflächen (30) enthaltend
einen Schritt des Aufrauhens und Erwärmens der Kunststoffoberfläche durch eine Strahlbehandlung, wobei für die Strahlbehandlung Kunststoffgranulat als Strahlmittel eingesetzt wird; und
einen Schritt des Aufbringens des Beschichtungswerkstoffs (32) auf die aufgerauhte und noch erwärmte Oberfläche.

2. Verfahren nach Anspruch 1, **gekennzeichnet durch** Verwenden eines Duroplastgranulats als Kunststoffgranulat, vorzugsweise eines DS II Duroplasts.

3. Verfahren nach einem der vorhergehenden Ansprüche, **gekennzeichnet durch** Verwenden eines Granulats mit einer Körnergröße im Bereich von 12 µ bis 16 µ.

4. Verfahren nach einem der vorhergehenden Ansprüche, **gekennzeichnet durch** Durchführen der Strahlbehandlung bei einem Strahldruck von etwa 4 bar.

5. Verfahren nach einem der vorhergehenden Ansprüche, **dadurch gekennzeichnet, dass** sich die Kunststoffoberfläche (30) durch die Strahlbehandlung lokal ausdehnt, so dass beim anschließenden Abkühlen in der Kunststoffoberfläche Hinterschneidungen (33) gebildet werden.

6. Verfahren nach einem der vorhergehenden Ansprüche, **gekennzeichnet durch** die Verwendung eines metallischen Werkstoffs als Beschichtungswerkstoff.

7. Verfahren nach Anspruch 6, **gekennzeichnet durch** die Verwendung von Zink als Beschichtungswerkstoff und **durch** Aufbringen des Beschichtungswerkstoffs im Lichtbogenspritzverfahren.

8. Verfahren nach einem der vorhergehenden Ansprüche, **dadurch gekennzeichnet, dass** die Kunststoffoberfläche (30) nach der Strahlbehandlung und vor und/oder nach dem Beschichten gesteuert abgekühlt wird.

9. Metallisch beschichtete Kunststoffoberfläche (30) herstellbar nach einem der Ansprüche 1 bis 8, wobei die Oberfläche mikroskopisch eine faserige Struktur als Abdruck der faserigen Grund-Kunststoffoberfläche aufweist.

## Claims

1. Process for coating plastic surfaces (30) comprising a step of roughening and warming up the plastic surface by a blasting treatment, plastic granules being used as the blasting treatment; and
a step of applying the coating material (32) to the roughened and still warm surface.

2. Process according to Claim 1, **characterized by** using granules of a thermosetting material, preferably a DS II thermosetting material, as the plastic granules.

3. Process according to one of the preceding claims, **characterized by** using granules with a grain size in the range from 12 µ to 16 µ.

4. Process according to one of the preceding claims, **characterized by** carrying out the blasting treatment at a blasting pressure of approximately 4 bar.

5. Process according to one of the preceding claims, **characterized in that** the plastic surface (30) is locally stretched by a blasting treatment, so that undercuts (33) are formed in the plastic surface during subsequent cooling down.

6. Process according to one of the preceding claims, **characterized by** the use of a metallic material as coating material.

7. Process according to claim 6, **characterized by** the use of zinc as the coating material by the electric- arc spraying process.

8. Process according to one of the preceding claims, **characterized in that** the plastic surface (30) is cooled down in a controlled manner after the blasting treatment and before and/or after the coating.

9. Metallically coated surface (30) that can be produced according to one of claims 1 to 8, the surface microscopically having fibrous structure as an impression of the fibrous underlying plastic surface.

## Revendications

1. Procédé de revêtement de surfaces en matières plastique (30) contenant l'étape de formation d'une rugosité et réchauffement de la surface en matière plastique par un traitement par jet, dans lequel des granules de matière plastique sont utilisées, comme abrasif, comprenant l'étape d'application du matériau de revêtement(32) sur la surface rendue rugueuse et encore chauffée.

2. Procédé suivant la revendication 1, **caractérisé par** l'utilisation d'un granulé de matière thermodurcissable comme granulé de matière plastique, de préférence d'une matière thermodurcissable DS II.

3. Procédé suivant l'une des revendications précédentes, **caractérisé par** l'utilisation d'un granulé d'une granulométrie de l'ordre de 12 µ à 16 µ.

4. Procédé suivant l'une des revendications précédentes, **caractérisé par** l'exécution du traitement par jet à une pression de jet d'environ 4 bar.

5. Procédé suivant l'une des revendications précédentes, **caractérisé par le fait que** la surface en matière plastique (30) s'étend localement par le traitement par jet, de telle sorte que lors du refroidissement des contre-dépouilles (33) sont constitués sur la surface en matière plastique.

6. Procédé suivant l'une des revendications précédentes, **caractérisé par** l'utilisation d'un matériau métallique comme matériau de revêtement.

7. Procédé suivant la revendication 6, **caractérisé par** l'utilisation de zinc comme matériau de revêtement et par le dépôt du matériau de revêtement par le procédé de projection à l'arc électrique.

8. Procédé suivant l'une des revendications précédentes, **caractérisé en ce que** la surface en matière plastique (30) est refroidie de matière réglée après le traitement par jet et avant et/ou après l'application du revêtement.

9. Surface (30) de matière plastique revêtue de métal qui peut être fabriquée par l'une des revendications 1 à 8, la surface ayant micro-scopiquement une structure fibreuse sous la forme d'une reproduction de la surface fibreuse de la matière plastique de base.
